# EUROPÄISCHE PATENTANMELDUNG

(11) **EP 1 818 248 A2**
(43) Veröffentlichungstag der Anmeldung: **15.08.2007**
(21) Anmeldenummer: 07002909.5
(22) Anmeldetag: 12.02.2007
(51) Int. Cl.: B62K 3/00, B62M 1/04

(54) **Tretrollräder**

(30) Priorität: 10.02.2006 DE 102006006897
(71) Anmelder: Schmidt, Hans Eberhard, 13469 Berlin (DE); Kloss, Helmar, 06040 Cerreto di Spoleto (IT)
(72) Erfinder: Kloss, Helmar, 06040 Cerreto di Spoleto (IT)
(74) Vertreter: Radünz, Ingo

(57) **Zusammenfassung**

Die Erfindung betrifft Rollräder mit rollerähnlichem Rahmen (14), der vorn als Lenksäule (9) ausgebildet ist, an der oben eine Lenkstange (10) mit einem Lenker (8), unten eine Vorderradgabel (16) mit dem Vorderrad (15) in Querrichtung drehbar gelagert sind, um Fahrtrichtungsänderungen zu ermöglichen, und hinten in einer Hinterradgabel (6) mit einem Hinterrad (4) endet, sowie fahrradähnlichen Antriebsrädern (2). Die Rollräder bestehen aus Tretkurbel (13), Kette oder Riemen (7) oder zweckgleichen Bauteilen, und an der Hinterradachse (5) angebrachten Antrieben (1). Die Tretbewegungen des auf dem Rollrad stehenden Fahrers werden in Fortbewegung auf dem Lande umgesetzt. Dabei sind Mittelteil des Rahmens (14) links und rechts jeweils ein Tretbrett (11) mittels Tretbrettlagern (12) so gelagert und in Längsrichtung drehbar befestigt, dass die Tretbretter (11) an einer vorderen und einer hinteren Tretkurbel (13) in Längsrichtung gedreht werden können, wobei die Drehbewegungen der Tretkurbeln (13) durch eine zweite Kette bzw. Riemen (7') oder zweckgleiche Bauteile gleichgeschaltet werden.

## Beschreibung

Die vorliegende Erfindung betrifft eine Gruppe von Rollrädern, die "Tretrollräder" genannt werden sollen. Ihr Zweck ist die Fortbewegung auf dem Lande mithilfe der Körperkraft des Fahrers.

Bekannt sind a) Draisinen, b) einige Krankenfahrstühle, c) Rollschuhe, d) Roller, e) Skateboards, f) Tretroller und g) Fahrräder.
a) Draisinen sind Schienfahrzeuge, bei denen die Kraft von Oberkörper und Armen eines oder mehrerer Fahrer durch einen vor- und zurück zu bewegenden Hebel auf das oder die Antriebsräder übertragen wird. Die Fahrtrichtung wird von den Schienen bestimmt. Sie kommen hier nicht weiter in Betracht.
b) Krankenfahrstühle werden mit der Armkraft des Fahrers betrieben, indem dieser entweder mit den Händen die Räder dreht oder Hebel betätigt, welche die Antriebsräder antreiben. Auch sie kommen hier nicht weiter in Betracht.
c) Rollschuhe und davon abgeleitete Geräte sind an den Schuhen des Fahrers befestigte Rollen. Die Abstoßung jeweils eines Fußes vom Boden wird mithilfe der Rollen in Fortbewegung umgesetzt. Auch sie kommen hier nicht weiter in Betracht.
d) Roller sind Kinderfahrzeuge, bei denen ein Bein auf einem Fahrgestell ruht, während mit dem anderen Bein die Erde berührt wird, um sich in Fahrtrichtung abzustoßen. Das Gerät besitzt einen Lenker, der zusammen mit dem drehbar vom am Fahrgestell befestigten Vorderrad die Fahrtrichtung zu ändern erlaubt. In der einfachsten, zweirädrigen Version gleicht der Rahmen eins Tretrollrades dem eines Rollers.
e) Skateboards sind vom Prinzip der Fortbewegung her rollerähnlich, indem der Fahrer mit einem Bein auf einem Fahrgestell ruht, während mit dem anderen Bein die Erde berührt wird, um sich in Fahrtrichtung anzustoßen. Skateboards besitzen jedoch keinen Lenker und kommen hier nicht weiter in Betracht.
f) Tretroller haben ein Fahrgestell wie Roller, besitzen jedoch zusätzlich ein Pedal, mit dessen Auf- und Abwärtsbewegung die Kraft eines oder beider Beine des Fahrers durch ein geeignetes Getriebe in Drehbewegung zum Antrieb der Hinterachse umgesetzt werden kann.
g) Fahrräder sind dadurch gekennzeichnet, dass die Kraft der Beine des auf einem Sattel sitzenden Fahrers durch Pedale, die an Kurbeln befestigt sind, in Drehbewegung umgesetzt und durch ein geeignetes Getriebe - meist durch eine Kette, die über ein an der Tretkurbel befestigtes Zahnrad läuft - zum Antriebsrad übertragen wird. Fahrtrichtungsänderungen erfolgen zum einen durch Gewichtsverlagerung, zum anderen über ein vorn am Fahrgestell drehbar befestigtes Vorderrad, wie bei einem Roller bzw. Tretroller. Gebremst wird durch Beinkraft mithilfe von Rücktrittsbremsen und/oder durch am Lenker montierte, von Hand zu betätigte Bremsen.

Aufgabe der hier vorgelegten Erfindung ist es, die Fortbewegung auf dem Lande mithilfe von Bewegungen eines oder mehrerer Fahrer zu ermöglichen, die denen beim Gehen zu Fuß, beim Laufen, beim Langlauf auf Skiern oder beim Gehen oder Laufen auf der Stelle oder auf Treppen gleichen und bei der nicht nur die Kraft verschiedener Muskelgruppen, sondern das Körpergewicht eingesetzt wird.

Die Lösung der Aufgabe beruht auf einer Kombination aus Tretroller und Fahrrad - daher die Bezeichnung "Tretrollrad" - für die folgende Ausführungsbeispiele gegeben werden sollen.

### Fig. 1 und Fig. 2:

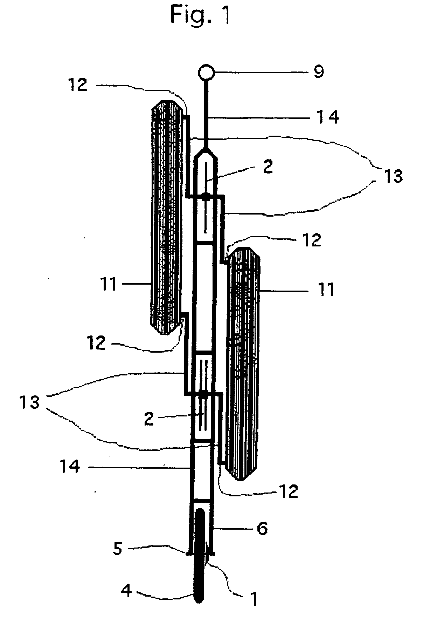

Wie aus Fig. 1 ersichtlich, wird ein Tretrollrad im Unterschied zu einem Tretroller mithilfe von zwei Tretbrettern 11 betrieben. In der zweirädrigen Ausbildung hat ein Tretrollrad denselben Aufbau wie ein Tretroller. Der Rahmen 14 besteht aus zwei Teilen:

Erstens, vorn aus der Lenksäule 9 oder einem funktionell gleichen Bauteil, in der wie bei Rollern, Tretrollern und Fahrrädern die Vordergabel 16 drehbar gelagert angebracht ist. Vorderrad 15 und Vordergabel 16 können mit Hilfe eines oben aus der Lenksäule 9 ragenden Lenkers 8 oder einem funktionell entsprechendem Bauteil gedreht werden, um Fahrtrichtungsänderungen zu bewirken. Lenker 8 und Lenksäule 9 oder funktionell entsprechende Bauteile dienen während der Fahrt zugleich dazu, dem Fahrer Halt zu geben.

Zweitens besteht der Rahmen 14 aus einem Teil, der den Fahrer trägt und an dem rechts und links je ein Tretbrett 11, Hinterradgabel 6 und Hinterradachse 5 sowie Antriebsräder 2 mit den Tretkurbeln 13 für die Kraftübertragung zu den Abtrieben 1 an der Hinterradachse 5 angebracht sind. Im Unterschied zu einem Fahrrad besitzt ein Tretrollrad keinen Fahrersattel. Vielmehr verlagert der Fahrer beim Fahren - abwechselnd auf dem linken oder rechten Tretbrett 11 stehend - sein Gewicht erst auf das eine, dann auf das andere Tretbrett 11, als ob er auf einem Paar Skiern stünde. Die aus der Gewichtsverlagerung resultierende Kraft wird über die Tretbrettlager 12 sowie die an den Antriebsrädern 2 gelagerten Tretkurbeln 13 durch eine oder mehrere Ketten 7 bzw. 7' oder andere dafür geeignete Antriebe zu den Abtrieben 1 an der Hinterradachse 5 übertragen.

### Fig. 3 und Fig. 4:

Die Tretbretter 11 können auch mit nur einer Tretkurbel 13, in der Höhe veränderlich oder in Gleitlagern 3 bzw. entsprechenden Bauteilen horizontal gleitend gelagert sein.

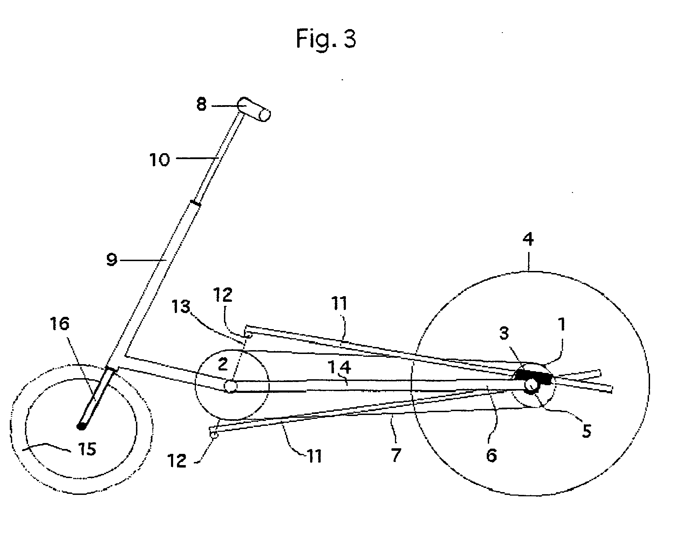

Im Beispiel in Fig. 3 sind die Tretbrettlager 12 hinten entfallen und durch Gleitlager 3 oder entsprechende Bauteile ersetzt, die an der Hinterradachse 5 oder Hinterradgabel 6 befestigt sein können.

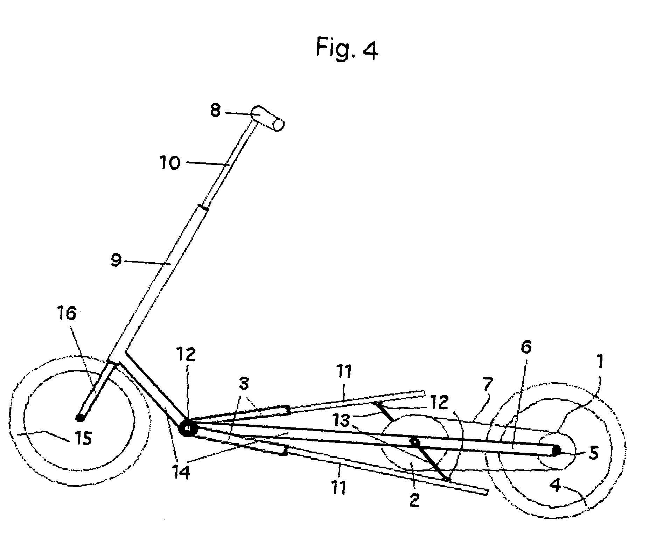

In Fig. 4 sind die Tretbrettlager 12 vorn entfallen und durch Gleitlager 3 oder entsprechende Bauteile ersetzt, die am Rahmen 14 an Stelle der Tretkurbel 13 angebracht sind. Die hier durch doppelte Lagerung der Tretbretter gewährleistete Standfestigkeit kann auch durch andere Bauteile erreicht werden.

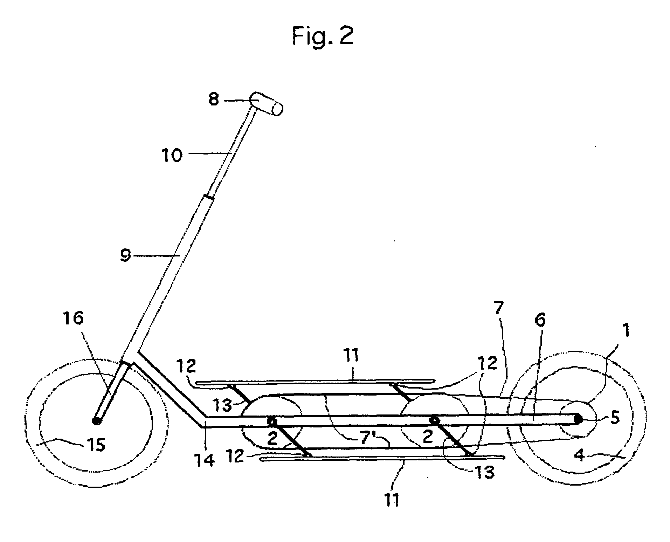

Alle in den Fig. 2, Fig. 3 und Fig. 4 dargestellten Beispiele können dreirädrig oder mit den erforderlichen Änderungen am Rahmen 14 - speziell dem vorderen Teil des Rahmens 8, 10, 9 und 16 - vierrädrig ausgelegt werden.

Die Bewegungen der Tretbretter müssen nicht notwendig, wie im Beispiel in Fig. 2, horizontal und parallel erfolgen und kreisförmig sein oder, wie in Fig. 3 und Fig. 4 gezeigt, in Fahrtrichtung neigungsverstellt erfolgen, sondern können durch geeignete Konstruktionsdetails anderen geometrischen Formen folgen, um den natürlichen Bewegungen des Menschen beim Gehen oder Laufen zu Fuß, auf Treppen oder auf der Stelle, beim Langlauf auf Skiern oder ähnlichen Arten der Fortbewegung weiter angenähert zu werden als mit den hier beschriebenen Konstruktionsbeispielen möglich.

Bei einem mehrrädrigen, hier nicht abgebildeten Tretrollrad ist die Lenksäule 9 als Rahmen ausgebildet, und für Drehbewegung des oder der Vorderräder ist ein Schneckengetriebe oder eine Vorrichtung mit entsprechender Funktion erforderlich.

Gebremst wird wie bei Fahrrädern (o. Abb.).

### Vorteile der Konstruktion gegenüber einem Tretroller:

Tretrollräder werden mit Bewegungen betrieben, die denen bei der menschlichen Fortbewegung zu Fuß, auf Skiern oder ähnlichen Arten der Fortbewegung nahekommen, bei denen nicht nur auf die Kraft einzelner Muskelgruppen, sondern das Körpergewicht genutzt wird. Dadurch ähneln Tretrollräder weniger Tretrollern als vielen modernen Sportgeräten.

### Vorteile der Konstruktion gegenüber vielen modernen Sportgeräten:

Im Unterschied zu vielen modernen Sportgeräten besitzen Tretrollräder den Vorteil, nicht nur der sportlichen Ertüchtigung, sondern der Fortbewegung und dem Transport von Personen und Sachen zu dienen.

### Vorteile der Konstruktion gegenüber normalen Fahrrädern:

Anders als bei der Benutzung eines Fahrrades können die Fahrer von Trettrollrädern eine natürliche, aufrechte Körperhaltung einnehmen, wie bei der menschlichen Fortbewegung zu Fuß, auf Skiern oder ähnlichen Arten der Fortbewegung.

Beim Treten setzen die Fahrer von Tretrollrädern nicht nur die Kraft ihrer Beinmuskeln ein, sondern ihr Körpergewicht.

Der Unterschied zwischen Damen- und Herrenfahrrädern entfällt bei Tretrollrädern, was sowohl bei der Herstellung, im Handel als auch beim Gebrauch Vorteile bringt.

Sogar Heranwachsende brauchen keine speziellen Konstruktionen. Es genügt, den Lenker eines Tretrollrades ihren Bedürfnissen entsprechend abzusenken.

### Bezugszeichenliste

- 1: Abtriebe
- 2: Antriebsrad
- 3: Gleitlager oder entsprechende Bauteile
- 4: Hinterrad
- 5: Hinterachse
- 6: Hinterradgabel
- 7: Kette/Riemen für Antrieb
- 7': Kette/Riemen für Tretbrettkoordinierung
- 8: Lenker
- 9: Lenksäule
- 10: Lenkstange
- 11: Tretbrett
- 12: Tretbrettlager
- 13: Tretkurbel
- 14: Rahmen
- 15: Vorderrad
- 16: Vorderradgabel

## Patentansprüche

1. Rollräder mit rollerähnlichem Rahmen (14), der vorn als Lenksäule (9) ausgebildet ist, an der oben eine Lenkstange (10) mit einem Lenker (8), unten eine Vorderradgabel (16) mit dem Vorderrad (15) in Querrichtung drehbar gelagert sind, um Fahrtrichtungsänderungen zu ermöglichen, und hinten in einer Hinterradgabel (6) mit einem Hinterrad (4) endet, sowie fahrradähnlichen Antriebsrädern (2), bestehend aus Tretkurbel (13), Kette oder Riemen (7) oder zweckgleichen Bauteilen, und an der Hinterradachse (5) angebrachten Antrieben (1), durch die Tretbewegungen des auf dem Rollrad stehenden Fahrers in Fortbewegung auf dem Lande umgesetzt werden, jedoch **dadurch gekennzeichnet, dass** am Mittelteil des Rahmens (14) links und rechts jeweils ein Tretbrett (11) mittels Tretbrettlagern (12) so gelagert und in Längsrichtung drehbar befestigt sind, dass die Tretbretter (11) an einer vorderen und einer hinteren Tretkurbel (13) in Längsrichtung gedreht werden können, wobei die Drehbewegungen der Tretkurbeln (13) durch eine zweite Kette bzw. Riemen (7') oder zweckgleiche Bauteile gleichgeschaltet werden.

2. Rollräder nach Anspruch 1, **dadurch gekennzeichnet, dass** die Tretbretter (11) vorn an der Tretkurbel (13) drehbar, hinten an Gleitlagern (3) oder entsprechenden Bauteilen an der Hinterradachse (5) oder der Hinterradgabel (6) in Längsrichtung verschieblich gelagert sind.

3. Rollräder nach Anspruch 1, **dadurch gekennzeichnet, dass** die Tretbretter (11) hinten an einer Tretkurbel (13) drehbar, vorn an Gleitlagern (3) oder entsprechenden Bauteilen am Rahmen (14) in Längsrichtung verschieblich gelagert sind.

4. Rollräder nach Anspruch 1, 2, oder 3, **dadurch gekennzeichnet, dass** die Tretrollräder drei Räder - je ein Vorderrad (15) und zwei Hinterräder (4) - besitzen.

5. Rollräder nach Anspruch 1, 2, oder 4, **dadurch gekennzeichnet, dass** die Tretrollräder drei Räder - je zwei Vorderräder (15) und ein Hinterrad (4) - besitzen.

6. Rollräder nach Anspruch 1, 2, oder 4, **dadurch gekennzeichnet, dass** die Tretrollräder vier Räder - je zwei Vorderräder (15) und zwei Hinterräder (4) - und zwei Gruppen von Tretbrettern (11) sowie einen konstruktiv entsprechend modifizierten Rahmen (14) besitzen.
